# EUROPEAN PATENT SPECIFICATION

(11) **EP 3 253 178 B1**
(45) Date of publication and mention of the grant of the patent: **07.04.2021**
(21) Application number: 17151431.8
(22) Date of filing: 13.01.2017
(51) Int. Cl.: H05B 6/64

(54) **DOORFRAME ASSEMBLY FOR MICROWAVE OVEN, METHOD AND DEVICE FOR CONTROLLING DOORFRAME ASSEMBLY**
TÜRRAHMENANORDNUNG FÜR MIKROWELLENOFEN, VERFAHREN UND VORRICHTUNG ZUR STEUERUNG DER TÜRRAHMENANORDNUNG
ENSEMBLE DENCADREMENT DE PORTE POUR FOUR À MICRO-ONDES, PROCÉDÉ ET DISPOSITIF POUR COMMANDER UN ENSEMBLE D'ENCADREMENT DE PORTE

(30) Priority: 30.05.2016 CN 201610371796
(43) Date of publication of application: 06.12.2017
(73) Proprietor: Beijing Xiaomi Mobile Software Co., Ltd., Beijing 100085 (CN)
(72) Inventor: LIU, Tie, Beijing, 100085 (CN); LUO, Jicheng, Beijing, 100085 (CN); WANG, Mengnan, Beijing, 100085 (CN)
(74) Representative: Kudlek, Franz Thomas

(56) References cited:
- EP-A2- 0 317 973
- EP-A2- 0 550 897
- CN-A- 105 201 384
- CN-U- 203 681 484
- CN-U- 205 048 496
- DE-A1- 1 553 307

## Description

### TECHNICAL FIELD

The present disclosure generally relates to the field of smart home, and more particularly, to a doorframe assembly for a microwave oven, and a method and a device for controlling the doorframe assembly.

### BACKGROUND

Generally, a door of a microwave oven may be opened/closed by pulling/pushing the door manually by a user. In the case where the pushing/pulling force applied by the user is insufficient to move the door, the user may be unable to push or pull the door of the microwave oven and thus may be unable to open/close the door normally.

Document EP 0 550 897 A2 refers to a microwave oven with an automatic door control device. A door latching/opening means which uses permanent magnets and electromagnets is provided in place of hook-type door latches and slots on an oven wall. Door state detecting means is also provided in which the existing permanent magnets and electromagnets rather than a seperate mechanical switch are utilized to discrimate the door closed state from the door open state. A processing means is employed to control the operation of the door latching/opening means and microwave energy generator in response to the input signals from the door state detecting means and the door open switch.

Document CN 205 048 496 U provides a microwave oven with an electromagnetic buffer chamber door for preventing closing the chamber door with large strength, which could cause clashing between magnetic devices. The microwave oven comprises a casing and a door. An electromagnet is provided in the casing and a permanent magnet is provided in the door. An angular transducer is provided to detect an opening angle of the door. The angular transducer is connected with a controller, which controls the electromagnet.

Document CN 105 201 384 A discloses an anti-crash device for a door. The anti-crash device comprises a door frame and the door. An electromagnetic induction coil is arranged in the door frame. Magnets are arranged on the door. By means of the electromagnetic induction coil and the magnets on the door, induction charging of the electromagnetic induction coil can be achieved in the process that the door moves towards the door frame. Buffering movement of the door can be achieved.

Document CN 203 681 484 U refers to an automobile electromagnetic force-assistance lock device.

### SUMMARY

The present disclosure provides a doorframe assembly for a microwave oven, and a method and a device for controlling the doorframe assembly. The technical solution is as below:

According to a first aspect of the present invention, there is provided a doorframe assembly for a microwave oven including: a door sheet; and a doorframe connected to the door sheet by a door hinge, wherein the door sheet includes at least one region opposite to the doorframe, a first region of the door sheet opposite to the doorframe is provided with a first type of magnet, a second region of the doorframe opposite to the first region is provided with a second type of magnet, the first type of magnet is one of a permanent magnet and an electrical magnet, and the second type of magnet is the other one of the permanent magnet and the electrical magnet, and wherein the doorframe assembly further includes a control chip and a distance sensor that are interconnected, the distance sensor is configured to detect a distance between the door sheet and the doorframe, and the control chip is configured to control a direction of a current in the electrical magnet according to the distance detected by the distance sensor. By connecting the control chip with the distance sensor and detecting the distance between the door sheet of the microwave oven and the doorframe of the microwave oven using the distance sensor, the direction of the current flowed in the electrical magnet may be controlled by the control chip according to the distance determined by the distance sensor. The direction of the current flowed in the electrical magnet is related to the change of the distance between the door sheet of the microwave oven and the doorframe of the microwave oven, and thus it may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

Advantageously, the distance sensor is disposed at a first mounting position on the first region and detects a relative distance between the door sheet and the doorframe at the first mounting position, and wherein the relative distance is a vertical distance between the first mounting position and a plane in which the doorframe is positioned; or, the distance sensor is disposed at a second mounting position on the second region and detects a relative distance between the door sheet and the doorframe at the second mounting position, and wherein the relative distance is a vertical distance between the second mounting position and a plane in which the door sheet is positioned.

Advantageously, the door sheet is provided with a handle portion, and a parameter acquisition device, configured to acquire environmental characteristic parameters including at least one of temperature, brightness and pressure, is provided on the handle portion.

Advantageously, the parameter acquisition device is coupled to the distance sensor by wiring, or is coupled to the control chip by wiring.

According to a second aspect of the present invention, there is provided a method for controlling a doorframe assembly, the method being applicable in a microwave oven including a doorframe assembly according to the first aspect of the present disclosure, and the method including: inputting a current in a first direction to the electrical magnet when the control chip receives a first control signal transmitted from the distance sensor, so that an end of the electrical magnet facing the permanent magnet has a polarity opposite to that of the permanent magnet, the first control signal being generated when the distance sensor detects a decreasing distance between the door sheet and the doorframe; and inputting a current in a second direction to the electrical magnet when the control chip receives a second control signal transmitted from the distance sensor, so that the end of the electrical magnet facing the permanent magnet has a polarity the same as that of the permanent magnet, the second control signal being generated when the distance sensor detects an increasing distance between the door sheet and the doorframe, wherein the first direction differs from the second direction. The end of the electrical magnet facing the permanent magnet may be controlled to have a polarity opposite to or the same as that of the permanent magnet, by receiving at the control chip the control signal transmitted from the distance sensor and then inputting to the electrical magnet the current in the direction corresponding to the control signal. The control signal is generated according to the detected change of the distance between the door sheet of the microwave oven and the doorframe of the microwave oven, and thus it may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

Advantageously, the method further includes: receiving, at the control chip, a detection-on signal transmitted from the parameter acquisition device, the detection-on signal being generated by the parameter acquisition device when an acquired parameter reaches a predetermined parameter level; and transmitting, from the control chip to the distance sensor, a detection-on instruction for triggering the distance sensor to detect a distance change between the door sheet and the doorframe. The detection-on instruction is transmitted from the control chip to the distance sensor after the detection-on signal transmitted from the parameter acquisition device is received, and since the detection-on signal is generated by the parameter acquisition device when the acquired parameter reaches the predetermined parameter level, the distance between the door sheet of the microwave oven and the doorframe of the microwave oven is detected only when the door sheet of the microwave oven is operated by the user, thereby reducing power consumption of the doorframe assembly.

Advantageously, the method further includes: receiving, at the control chip, a third control signal transmitted from the distance sensor and carrying an acceleration of the door sheet, the third control signal being generated when the distance sensor detects a decreasing distance between the door sheet and the doorframe and a detected acceleration of the door sheet is greater than an acceleration threshold; querying, by the control chip, a predetermined current value corresponding to the acceleration of the door sheet, the acceleration of the door sheet being proportional to the predetermined current value; and inputting, by the control chip, a current in the second direction having the predetermined current value to the electrical magnet. The control chip inputs the current having the predetermined current value in the second direction to the electrical magnet when the distance between the door sheet and the doorframe is decreased and the acceleration of the door sheet is greater than the acceleration threshold, and since the acceleration of the door sheet of the microwave oven is proportional to the predetermined current value when the acceleration of the door sheet of the microwave oven is greater than the acceleration threshold, the control chip may control the electrical magnet to generate a repulsion force between the electrical magnet and the permanent magnet when the door sheet of the microwave oven is closed too fast, thereby preventing damage to the door sheet due to impacts between the door sheet of the microwave oven and the doorframe of the microwave oven.

According to a third aspect of the present invention, there is provided a device for controlling a doorframe assembly, the device being applicable in a microwave oven including a doorframe assembly according to the first aspect of the present disclosure, the device including: a first input module, configured to input a current in a first direction to the electrical magnet when the control chip receives a first control signal transmitted from the distance sensor, so that an end of the electrical magnet facing the permanent magnet has a polarity opposite to that of the permanent magnet, the first control signal being generated when the distance sensor detects a decreasing distance between the door sheet and the doorframe; and a second input module, configured to input a current in a second direction to the electrical magnet when the control chip receives a second control signal transmitted from the distance sensor, so that the end of the electrical magnet facing the permanent magnet has a polarity the same as that of the permanent magnet, the second control signal being generated when the distance sensor detects an increasing distance between the door sheet and the doorframe, wherein the first direction differs from the second direction.

Advantageously, the device further includes: a first receiving module, configured to receive a detection-on signal transmitted from the parameter acquisition device, the detection-on signal being generated by the parameter acquisition device when an acquired parameter reaches a predetermined parameter level; and a transmitting module, configured to transmit, to the distance sensor, a detection-on instruction for triggering the distance sensor to detect a distance change between the door sheet and the doorframe.

Advantageously, the device further includes a second receiving module, configured to receive a third control signal transmitted from the distance sensor and carrying an acceleration of the door sheet, the third control signal being generated when the distance sensor detects a decreasing distance between the door sheet and the doorframe and a detected acceleration of the door sheet is greater than an acceleration threshold; a querying module, configured to query a predetermined current value corresponding to the acceleration of the door sheet, the acceleration of the door sheet being proportional to the predetermined current value; and a third input module, configured to input a current in the second direction having the predetermined current value to the electrical magnet.

According to a fourth aspect of the present invention, there is also provided a computer program for executing the steps of a method for controlling a doorframe assembly as described above when this program is executed by a processor.

This program can use any programming language and take the form of source code, object code or a code intermediate between source code and object code, such as a partially compiled form, or any other desirable form.

The present disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Advantageously, the information medium can be an integrated circuit in which the program is incorporated, the circuit being adapted to execute the method in question or to be used in its execution.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1A is a structural diagram of a doorframe assembly applicable in a microwave oven according to an exemplary embodiment;
Fig. 1B is a structural diagram of a doorframe assembly applicable in a microwave oven according to another exemplary embodiment;
Fig. 1C is a top view of a doorframe assembly applicable in a microwave oven according to an exemplary embodiment;
Fig. 2 is a flow chart illustrating a method for controlling a doorframe assembly according to an exemplary embodiment;
Fig. 3 is a flow chart illustrating a method for controlling a doorframe assembly according to another exemplary embodiment;
Fig. 4A is a block diagram of a device for controlling a doorframe assembly according to an exemplary embodiment; and
Fig. 4B is a block diagram of a device for controlling a doorframe assembly according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

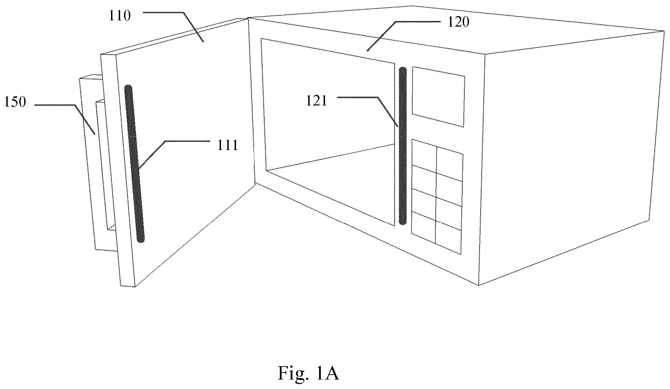

Fig. 1A is a structural diagram of a doorframe assembly applicable in a microwave oven according to an exemplary embodiment. The doorframe assembly of the microwave oven may include but not limited to: a door sheet 110, a doorframe 120, a control chip 130, a distance sensor 140 and a door hinge.

As illustrated in Fig. 1A, the door sheet 110 is connected to the doorframe 120 by the door hinge. The door sheet 110 includes at least one region opposite to the doorframe 120. A first region 111 of the door sheet 110 opposite to the doorframe 120 is provided with a first type of magnet. A second region 121 of the doorframe 120 opposite to the first region 111 is provided with a second type of magnet. The first type of magnet is one of a permanent magnet and an electrical magnet, and the second type of magnet is the other one of the permanent magnet and the electrical magnet.

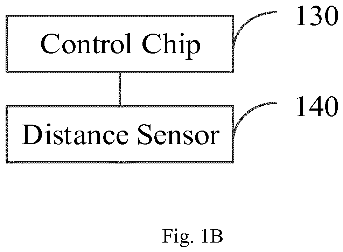

Fig. 1B is a structural diagram of a doorframe assembly applicable in a microwave oven according to another exemplary embodiment. As illustrated in Fig. 1B, the control chip 130 is interconnected to the distance sensor 140. The distance sensor 140 is configured to detect a distance between the door sheet and the doorframe, and the control chip 130 is configured to control a direction of a current in the electrical magnet according to the distance detected by the distance sensor 140.

Accordingly, according to the doorframe assembly applicable in a microwave oven according to embodiments of the present disclosure, by connecting the control chip with the distance sensor and detecting the distance between the door sheet and the doorframe using the distance sensor, the direction of the current flowed in the electrical magnet may be controlled by the control chip according to the distance determined by the distance sensor. The direction of the current flowed in the electrical magnet is related to the change of the distance between the door sheet of the microwave oven and the doorframe of the microwave oven, and thus it may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

Continuing referring to Fig. 1A, the doorframe assembly of the microwave oven may include but not limited to: the door sheet 110, the doorframe 120, the control chip 130, the distance sensor 140 and the door hinge.

The door sheet 110 is connected to the doorframe 120 by the door hinge. The door sheet 110 includes at least one region opposite to the doorframe 120. A first region 111 of the door sheet 110 opposite to the doorframe 120 is provided with a first type of magnet. A second region 121 of the doorframe 120 opposite to the first region 111 is provided with a second type of magnet. The first type of magnet is one of a permanent magnet and an electrical magnet, and the second type of magnet is the other one of the permanent magnet and the electrical magnet.

As illustrated in Fig. 1B, the control chip 130 is interconnected to the distance sensor 140. The distance sensor 140 is configured to detect a distance between the door sheet and the doorframe, and the control chip 130 is configured to control a direction of a current in the electrical magnet according to the distance detected by the distance sensor 140.

Alternatively, referring to Figs. 1A and 1B, the distance sensor 140 may be provided in the first region 111 or the second region 121, or may be provided in other positions, which is not limited in the present embodiment.

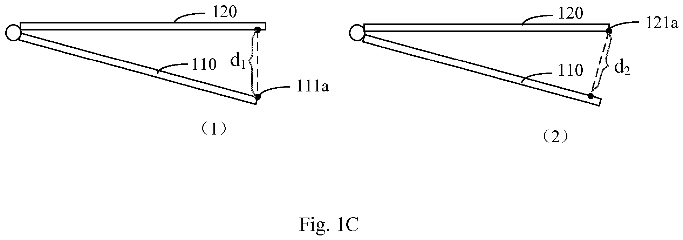

Fig. 1C is a top view of a doorframe assembly applicable in a microwave oven according to an exemplary embodiment. As illustrated in Fig. 1C, the distance between the door sheet 110 and the doorframe 120 detected by the distance sensor 140 may be different according to different mounting positions of the distance sensor 140.

In part (1) of Fig. 1C, the distance sensor 140 is disposed at a first mounting position 111a on the first region 111, and detects a relative distance between the door sheet 110 and the doorframe 120 at the first mounting position 111a. The relative distance is a vertical distance d₁ between the first mounting position 111a and a plane in which the doorframe 120 is positioned.

In part (2) of Fig. 1C, the distance sensor 140 is disposed at a second mounting position 121a on the second region 121 and detects a relative distance between the door sheet 110 and the doorframe 120 at the second mounting position 121a. The relative distance is a vertical distance d₂ between the second mounting position 121a and a plane in which the door sheet 110 is positioned.

Alternatively, the control chip 130 may be disposed in the distance sensor 140, or may be disposed at other positions, which is not limited herein.

Alternatively, continuing referring to Fig. 1A, a handle portion 150 is provided on the door sheet 110. The doorframe assembly further includes a parameter acquisition device provided on the handle portion 150.

Herein, the parameter acquisition device acquires environmental characteristic parameters at the handle portion 150 including at least one of temperature, brightness and pressure.

According to the present embodiment, the parameter acquisition device may be coupled to the distance sensor 140 by wiring, or is coupled to the control chip 130 by wiring.

Accordingly, according to the doorframe assembly applicable in a microwave oven according to embodiments of the present disclosure, by connecting the control chip with the distance sensor and detecting the distance between the door sheet and the doorframe using the distance sensor, the direction of the current flowed in the electrical magnet may be controlled by the control chip according to the distance determined by the distance sensor. The direction of the current flowed in the electrical magnet is related to the change of the distance between the door sheet of the microwave oven and the doorframe of the microwave oven, and thus it may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

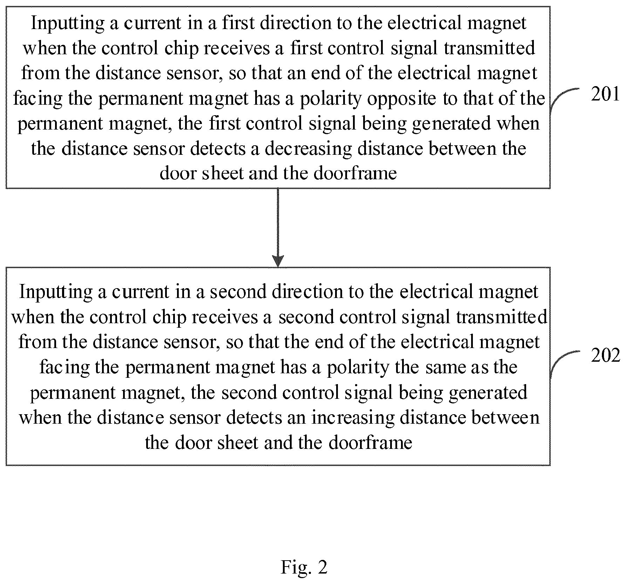

Fig. 2 is a flow chart illustrating a method for controlling a doorframe assembly according to an exemplary embodiment. As illustrated in Fig. 2, the method for controlling the doorframe assembly is applicable in the doorframe assembly illustrated in Fig. 1A, and may include the steps as follows.

In step 201, a current in a first direction is input to the electrical magnet when the control chip receives a first control signal transmitted from the distance sensor, so that an end of the electrical magnet facing the permanent magnet has a polarity opposite to that of the permanent magnet. The first control signal is generated when the distance sensor detects a decreasing distance between the door sheet and the doorframe.

In step 202, a current in a second direction is input to the electrical magnet when the control chip receives a second control signal transmitted from the distance sensor, so that the end of the electrical magnet facing the permanent magnet has a polarity the same as that of the permanent magnet. The second control signal is generated when the distance sensor detects an increasing distance between the door sheet and the doorframe.

Accordingly, according to the method for controlling a doorframe assembly according to embodiments of the present disclosure, the end of the electrical magnet facing the permanent magnet may be controlled to have a polarity opposite to or the same as that of the permanent magnet, by receiving at the control chip the control signal transmitted from the distance sensor and then inputting to the electrical magnet the current in the direction corresponding to the control signal. The control signal is generated according to the detected change of the distance between the door sheet of the microwave oven and the doorframe of the microwave oven, and thus may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

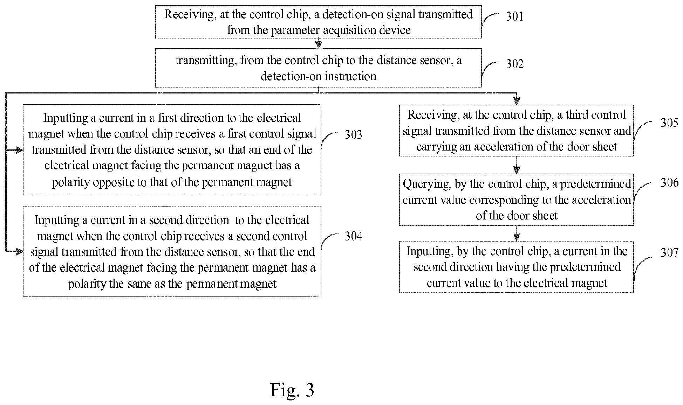

In daily life, the distance between the door frame of the microwave oven and the doorframe of the microwave oven may be changed due to natural factors such as wind force. A parameter acquisition device may be provided at a handle portion of the microwave oven to avoid frequent detection of unnecessary distance change using the distance sensor. When the control chip receives a detection-on signal transmitted from the parameter acquisition device, the control chip may transmit a detection-on instruction to the distance sensor for triggering the distance sensor to detect a distance change between the door sheet of the microwave oven and the doorframe of the microwave oven. The detection-on signal is generated by the parameter acquisition device when the acquired parameter reaches the predetermined parameter level, the distance between the door sheet of the microwave oven and the doorframe of the microwave oven is detected only when the door sheet of the microwave oven is operated by the user, thereby reducing power consumption of the doorframe assembly. Fig. 3 is a flow chart illustrating a method for controlling a doorframe assembly according to another exemplary embodiment. As illustrated in Fig. 3, the method for controlling the doorframe assembly is applicable in the doorframe assembly illustrated in Fig. 1A, and may include the steps as follows.

In step 301, the control chip receives the detection-on signal transmitted from the parameter acquisition device.

Herein, the detection-on signal is generated by the parameter acquisition device when the acquired parameter reaches the predetermined parameter level.

When a parameter is acquired by the parameter acquisition device, the parameter acquisition device judges whether the acquired parameter reaches the predetermined parameter level, and transmits the detection-on signal to the control chip when the parameter reaches the predetermined parameter level.

For example, assuming that parameters 1 to 10 belong to the first parameter level, parameters 11 to 20 belong to the second parameter level, and the predetermined parameter level is the second parameter level. When the parameter acquisition device acquires a parameter 9, it is judged that the parameter 9 docs not reach the second parameter level, and thus no further operation is performed. When the parameter acquisition device acquires a parameter 13, it is judged that the parameter 13 reaches the second parameter level, and thus the detection-on signal is transmitted to the control chip.

Herein, the parameter is a parameter acquired by the parameter acquisition device corresponding to the environmental characteristic parameters at the handle portion of the microwave oven.

When the environmental characteristic parameter is temperature, the parameter corresponding to temperature may be a temperature value. When the environmental characteristic parameter is brightness, the parameter corresponding to brightness may be a brightness value. When the environmental characteristic parameter is pressure, the parameter corresponding to pressure may be a pressure value.

It should be noted that, detailed parameter level is not limited in the present embodiment.

In step 302, the control chip transmits a detection-on instruction to the distance sensor.

Herein, the detection-on instruction is an instruction for triggering the distance sensor to detect a distance change between the door sheet of the microwave oven and the doorframe of the microwave oven.

In step 303, a current in a first direction is input to the electrical magnet when the control chip receives a first control signal transmitted from the distance sensor, so that an end of the electrical magnet facing the permanent magnet has a polarity opposite to that of the permanent magnet.

Herein, the first control signal is generated when the distance sensor detects a decreasing distance between the door sheet of the microwave oven and the doorframe of the microwave oven.

When the control chip controls the end of the electrical magnet facing the permanent magnet to have a polarity opposite to that of the permanent magnet, attraction force may be generated between the electrical magnet and the permanent magnet. Accordingly, as the electrical magnet and the permanent magnet are disposed respectively at the first region on the door sheet of the microwave oven and the second region on the doorframe of the microwave oven, the door sheet of the microwave oven and the doorframe of the microwave oven may attract each other.

When the distance between the door sheet of the microwave oven and the doorframe of the microwave oven decreases, it may be determined that the door sheet is approaching the doorframe by external force. At this time, if there is attraction force between the door sheet of the microwave oven and the doorframe of the microwave oven, the external force required to push the door sheet towards the doorframe may be effectively reduced.

In step 304, a current in a second direction is input to the electrical magnet when the control chip receives a second control signal transmitted from the distance sensor, so that the end of the electrical magnet facing the permanent magnet has a polarity the same as that of the permanent magnet.

Herein, the second control signal is generated when the distance sensor detects an increasing distance between the door sheet of the microwave oven and the doorframe of the microwave oven.

When the control chip controls the end of the electrical magnet facing the permanent magnet to have a polarity the same as that of the permanent magnet, repulsion force may be generated between the electrical magnet and the permanent magnet. Accordingly, as the electrical magnet and the permanent magnet are disposed respectively at the first region on the door sheet of the microwave oven and the second region on the doorframe of the microwave oven, the door sheet of the microwave oven and the doorframe of the microwave oven may repulse each other.

When the distance between the door sheet of the microwave oven and the doorframe of the microwave oven increases, it may be determined that the door sheet is moving away from the doorframe by external force. At this time, if there is repulsion force between the door sheet of the microwave oven and the doorframe of the microwave oven, the external force required to push the door sheet away from the doorframe may be effectively reduced.

It should be noted that, the first direction differs from the second direction in the present embodiment.

In step 305, the control chip receives a third control signal transmitted from the distance sensor and carrying an acceleration of the door sheet.

Herein, the third control signal is generated when the distance sensor detects a decreasing distance between the door sheet and the doorframe and a detected acceleration of the door sheet is greater than an acceleration threshold.

It should be noted that the detailed magnitude of the acceleration threshold is not limited in the present embodiment.

In step 306, the control chip queries a predetermined current value corresponding to the acceleration of the door sheet.

Herein, the acceleration of the door sheet is proportional to the predetermined current value. The larger the acceleration of the door sheet of the microwave oven is, the larger the predetermined current value corresponding to the acceleration of the door sheet becomes.

In step 307, the control chip inputs a current in the second direction having the predetermined current value to the electrical magnet.

As can be seen from the definitional equation of intensification of magnetic induction, i.e., F=B×I×L, an electromagnetic force generated by the electrical magnet is proportional to the current flowing in the electrical magnet. Accordingly, the larger the current value of the current flowing in the second direction input to the electrical magnet is, the larger the electromagnetic force generated by the electrical magnet becomes, and thus the larger the repulsion force between the door sheet of the microwave oven and the doorframe of the microwave oven bccomcs.

Accordingly, according to the method for controlling a doorframe assembly according to embodiments of the present disclosure, the end of the electrical magnet facing the permanent magnet may be controlled to have a polarity opposite to or the same as that of the permanent magnet, by receiving at the control chip the control signal transmitted from the distance sensor and then inputting to the electrical magnet the current in the direction corresponding to the control signal. The control signal is generated according to the detected change of the distance between the door sheet of the microwave oven and the doorframe of the microwave oven, and thus may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

In the present embodiment, the control chip inputs the current having the predetermined current value in the second direction to the electrical magnet when the distance between the door sheet and the doorframe is decreased and the acceleration of the door sheet is greater than the acceleration threshold, and since the acceleration of the door sheet of the microwave oven is proportional to the predetermined current value when the acceleration of the door sheet of the microwave oven is greater than the acceleration threshold, the control chip may control the electrical magnet to generate a repulsion force between the electrical magnet and the permanent magnet when the door sheet of the microwave oven is closed too fast, thereby preventing damage to the door sheet due to impacts between the door sheet of the microwave oven and the doorframe of the microwave oven.

Hereinafter, device embodiments of the present disclosure will be described. The device embodiments may be configured to perform the method embodiments of the present disclosure. Relevant contents that are not disclosure in detail in the device embodiments may be referred to some explanations in the method embodiments.

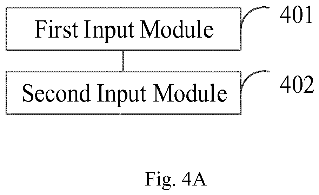

Fig. 4A is a block diagram of a device for controlling a doorframe assembly according to an exemplary embodiment. The device is applicable in a microwave oven. As illustrated in Fig. 4A, the device for controlling a doorframe assembly is applicable in the doorframe assembly illustrated in Fig. 1A. The device for controlling the doorframe assembly may include but not limited to: a first input module 401 and a second input module 402.

The first input module 401 is configured to input a current in a first direction to the electrical magnet when the control chip receives a first control signal transmitted from the distance sensor, so that an end of the electrical magnet facing the permanent magnet has a polarity opposite to that of the permanent magnet. The first control signal is generated when the distance sensor detects a decreasing distance between the door sheet and the doorframe.

When the control chip controls the end of the electrical magnet facing the permanent magnet to have a polarity opposite to that of the permanent magnet, attraction force may be generated between the electrical magnet and the permanent magnet. Accordingly, as the electrical magnet and the permanent magnet are disposed respectively at the first region on the door sheet of the microwave oven and the second region on the doorframe of the microwave oven, the door sheet of the microwave oven and the doorframe of the microwave oven may attract each other.

When the distance between the door sheet of the microwave oven and the doorframe of the microwave oven decreases, it may be determined that the door sheet is approaching the doorframe by external force. At this time, if there is attraction force between the door sheet of the microwave oven and the doorframe of the microwave oven, the external force required to push the door sheet towards the doorframe may be effectively reduced.

The second input module 402 is configured to input a current in a second direction to the electrical magnet when the control chip receives a second control signal transmitted from the distance sensor, so that the end of the electrical magnet facing the permanent magnet has a polarity the same as that of the permanent magnet. The second control signal is generated when the distance sensor detects an increasing distance between the door sheet and the doorframe. The first direction differs from the second direction.

When the control chip controls the end of the electrical magnet facing the permanent magnet to have a polarity the same as that of the permanent magnet, repulsion force may be generated between the electrical magnet and the permanent magnet. Accordingly, as the electrical magnet and the permanent magnet arc disposed respectively at the first region on the door sheet of the microwave oven and the second region on the doorframe of the microwave oven, the door sheet of the microwave oven and the doorframe of the microwave oven may repulse each other.

When the distance between the door sheet of the microwave oven and the doorframe of the microwave oven increases, it may be determined that the door sheet is moving away from the doorframe by external force. At this time, if there is repulsion force between the door sheet of the microwave oven and the doorframe of the microwave oven, the external force required to push the door sheet away from the doorframe may be effectively reduced.

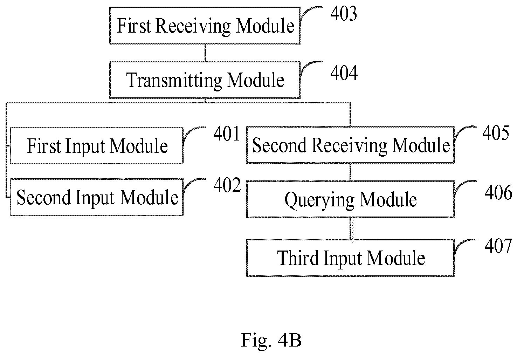

In a further possible implementation, as illustrated in Fig. 4B, which is a block diagram of a device for controlling a doorframe assembly according to another exemplary embodiment, the device further includes a first receiving module 403 and a transmitting module 404.

The first receiving module 403 is configured to receive a detection-on signal transmitted from the parameter acquisition device. The detection-on signal is generated by the parameter acquisition device when an acquired parameter reaches a predetermined parameter level.

When a parameter is acquired by the parameter acquisition device, the parameter acquisition device judges whether the acquired parameter reaches the predetermined parameter level, and transmits the detection-on signal to the control chip when the parameter reaches the predetermined parameter level.

Herein, the parameter is a parameter acquired by the parameter acquisition device corresponding to the environmental characteristic parameters at the handle portion of the microwave oven.

When the environmental characteristic parameter is temperature, the parameter corresponding to temperature may be a temperature value. When the environmental characteristic parameter is brightness, the parameter corresponding to brightness may be a brightness value. When the environmental characteristic parameter is pressure, the parameter corresponding to pressure may be a pressure value.

It should be noted that, detailed parameter level is not limited in the present embodiment.

The transmitting module 404 is configured to transmit, to the distance sensor, a detection-on instruction for triggering the distance sensor to detect a distance change between the door sheet and the doorframe.

In a further possible implementation, continuing referring to Fig. 4B, the device further includes a second receiving module 405, a querying module 406 and a third input module 407.

The second receiving module 405 is configured to receive a third control signal transmitted from the distance sensor and carrying an acceleration of the door sheet. The third control signal is generated when the distance sensor detects a decreasing distance between the door sheet and the doorframe and a detected acceleration of the door sheet is greater than an acceleration threshold.

It should be noted that detailed magnitude of the acceleration threshold is not limited in the present embodiment.

The querying module 406 is configured to query a predetermined current value corresponding to the acceleration of the door sheet. The acceleration of the door sheet is proportional to the predetermined current value.

The larger the acceleration of the door sheet of the microwave oven is, the larger the predetermined current value corresponding to the acceleration of the door sheet becomes.

The third input module 407 is configured to input a current in the second direction having the predetermined current value to the electrical magnet.

As can be seen from the definitional equation of intensification of magnetic induction, i.e., F=B×I×L, an electromagnetic force generated by the electrical magnet is proportional to the current flowing in the electrical magnet. Accordingly, the larger the current value of the current flowing in the second direction input to the electrical magnet is, the larger the electromagnetic force generated by the electrical magnet becomes, and thus the larger the repulsion force between the door sheet of the microwave oven and the doorframe of the microwave oven becomes.

Accordingly, according to the method for controlling a doorframe assembly according to embodiments of the present disclosure, the end of the electrical magnet facing the permanent magnet may be controlled to have a polarity opposite to or the same as that of the permanent magnet, by receiving at the control chip the control signal transmitted from the distance sensor and then inputting to the electrical magnet the current in the direction corresponding to the control signal. The control signal is generated according to the detected change of the distance between the door sheet of the microwave oven and the doorframe of the microwave oven, and thus may solve a problem in the case where the pushing/pulling force applied by the user is insufficient to move the door, the user cannot push or pull the door of the microwave oven and thus unable to opcn/closc the door normally. Accordingly, when the user pushes or pulls the door of the microwave oven, a force in the same direction of the door movement may be generated automatically by the microwave oven, thereby reducing the force required to push or pull the door.

In the present embodiment, the end of the electrical magnet facing the permanent magnet may be controlled to have a polarity opposite to or the same as that of the permanent magnet, by receiving at the control chip the control signal transmitted from the distance sensor and then inputting to the electrical magnet the current in the direction corresponding to the control signal. The control signal is generated according to the detected change of the distance between the door sheet of the microwave oven and the doorframe of the microwave oven, and thus may solve a problem in the case where the pushing/pulling force applied by the user is insufficient to move the door, the user cannot push or pull the door of the microwave oven and thus unable to open/close the door normally. Accordingly, when the user pushes or pulls the door of the microwave oven, a force in the same direction of the door movement may be generated automatically by the microwave oven, thereby reducing the force required to push or pull the door.

In the present embodiment, the detection-on instruction is transmitted from the control chip to the distance sensor after the detection-on signal transmitted from the parameter acquisition device is received, and since the detection-on signal is generated by the parameter acquisition device when the acquired parameter reaches the predetermined parameter level, the distance between the door sheet of the microwave oven and the doorframe of the microwave oven is detected only when the door sheet of the microwave oven is operated by the user, thereby reducing power consumption of the doorframe assembly.

In the present embodiment, the control chip inputs the current having the predetermined current value in the second direction to the electrical magnet when the distance between the door sheet and the doorframe is decreased and the acceleration of the door sheet is greater than the acceleration threshold, and since the acceleration of the door sheet of the microwave oven is proportional to the predetermined current value when the acceleration of the door sheet of the microwave oven is greater than the acceleration threshold, the control chip may control the electrical magnet to generate a repulsion force between the electrical magnet and the permanent magnet when the door sheet of the microwave oven is closed too fast, thereby preventing damage to the door sheet due to impacts between the door sheet of the microwave oven and the doorframe of the microwave oven.

## Claims

1. A doorframe assembly for a microwave oven **characterized in** comprising:
a door sheet (110); and
a doorframe (120) connected to the door sheet (110) by a door hinge,
wherein the door sheet (110) comprises at least one region opposite to the doorframe (120), a first region (111) of the door sheet (110) opposite to the doorframe (120) is provided with a first type of magnet, a second region (121) of the doorframe (120) opposite to the first region (111) is provided with a second type of magnet, the first type of magnet is one of a permanent magnet and an electrical magnet, and the second type of magnet is the other one of the permanent magnet and the electrical magnet, and
wherein the doorframe assembly further comprises a control chip (130) and a distance sensor (140) that are interconnected, the distance sensor (140) is configured to detect a change of a distance between the door sheet (110) and the doorframe (120), and the control chip (130) is configured to control a direction of a current in the electrical magnet according to the change of the distance detected by the distance sensor (140).

2. The doorframe assembly according to claim 1, wherein the distance sensor (140) is disposed at a first mounting position (111a) on the first region (111) and detects a relative distance between the door sheet (110) and the doorframe (120) at the first mounting position (111a), and wherein the relative distance is a vertical distance between the first mounting position (111a) and a plane in which the doorframe (120) is positioned;
or,
wherein the distance sensor (140) is disposed at a second mounting position (121a) on the second region (121) and detects a relative distance between the door sheet (110) and the doorframe (120) at the second mounting position (121a), and wherein the relative distance is a vertical distance between the second mounting position (121a) and a plane in which the door sheet (110) is positioned.

3. The doorframe assembly according to claim 1 or 2, wherein the door sheet (110) is provided with a handle portion (150), and a parameter acquisition device, configured to acquire environmental characteristic parameters comprising at least one of temperature, brightness and pressure, is provided on the handle portion (150).

4. The doorframe assembly according to claim 3, wherein the parameter acquisition device is coupled to the distance sensor (140) by wiring, or is coupled to the control chip (130) by wiring.

5. A method for controlling a doorframe assembly according to any one of the preceding claims, **characterized in** the method comprising:
inputting (201) a current in a first direction to the electrical magnet when the control chip receives a first control signal transmitted from the distance sensor (140), so that an end of the electrical magnet facing the permanent magnet has a polarity opposite to that of the permanent magnet, the first control signal being generated when the distance sensor (140) detects a decreasing distance between the door sheet (110) and the doorframe (120); and
inputting (202) a current in a second direction to the electrical magnet when the control chip (130) receives a second control signal transmitted from the distance sensor (140), so that the end of the electrical magnet facing the permanent magnet has a polarity the same as that of the permanent magnet, the second control signal being generated when the distance sensor (140) detects an increasing distance between the door sheet (110) and the doorframe (120),
wherein the first direction differs from the second direction.

6. The method according to claim 5 for controlling a doorframe assembly according to claim 3 or claim 4, wherein the method further comprises:
receiving (301), at the control chip (130), a detection-on signal transmitted from the parameter acquisition device, the detection-on signal being generated by the parameter acquisition device when an acquired parameter reaches a predetermined parameter level; and
transmitting (302), from the control chip (130) to the distance sensor (140), a detection-on instruction for triggering the distance sensor (140) to detect a distance change between the door sheet (110) and the doorframe (120).

7. The method according to claim 5 or claim 6, further comprising:
receiving (305), at the control chip (130), a third control signal transmitted from the distance sensor (140) and carrying an acceleration of the door sheet (110), the third control signal being generated when the distance sensor (140) detects a decreasing distance between the door sheet (110) and the doorframe (120) and a detected acceleration of the door sheet (110) is greater than an acceleration threshold;
querying (306), by the control chip (130), a predetermined current value corresponding to the acceleration of the door sheet (110), the acceleration of the door sheet (110) being proportional to the predetermined current value; and
inputting (307), by the control chip (130), a current in the second direction having the predetermined current value to the electrical magnet.

8. A microwave oven comprising a doorframe assembly according to any one of the claims 1 to 4 and a device for controlling said doorframe assembly, **characterized in** the device comprising:
a first input module (401), configured to input a current in a first direction to the electrical magnet when the control chip (130) receives a first control signal transmitted from the distance sensor (140), so that an end of the electrical magnet facing the permanent magnet has a polarity opposite to that of the permanent magnet, the first control signal being generated when the distance sensor (140) detects a decreasing distance between the door sheet (110) and the doorframe (120); and
a second input module (402), configured to input a current in a second direction to the electrical magnet when the control chip (130) receives a second control signal transmitted from the distance sensor (140), so that the end of the electrical magnet facing the permanent magnet has a polarity the same as that of the permanent magnet, the second control signal being generated when the distance sensor (140) detects an increasing distance between the door sheet (110) and the doorframe (120),
wherein the first direction differs from the second direction.

9. The microwave oven according to claim 8 comprising a doorframe assembly according to claim 3 or claim 4, wherein the device further comprises:
a first receiving module (403), configured to receive a detection-on signal transmitted from the parameter acquisition device, the detection-on signal being generated by the parameter acquisition device when an acquired parameter reaches a predetermined parameter level; and
a transmitting module (404), configured to transmit, to the distance sensor (140), a detection-on instruction for triggering the distance sensor (140) to detect a distance change between the door sheet (110) and the doorframe (120).

10. The microwave oven according to claim 8 or claim 9, further comprising:
a second receiving module (405), configured to receive a third control signal transmitted from the distance sensor (140) and carrying an acceleration of the door sheet (110), the third control signal being generated when the distance sensor (140) detects a decreasing distance between the door sheet (110) and the doorframe (120) and a detected acceleration of the door sheet (110) is greater than an acceleration threshold;
a querying module (406), configured to query a predetermined current value corresponding to the acceleration of the door sheet (110), the acceleration of the door sheet (110) being proportional to the predetermined current value; and
a third input module (407), configured to input a current in the second direction having the predetermined current value to the electrical magnet.

11. A computer program, which when executing on a processor, performs a method according to any one of claims 5 to 7.

12. A computer-readable information medium containing instructions of a computer program according to claim 11.

## Patentansprüche

1. Eine Türrahmenanordnung für einen Mikrowellenofen, **dadurch gekennzeichnet, dass** sie umfasst:
ein Türblatt (110); und
einem Türrahmen (120), der über ein Türscharnier mit dem Türblatt (110) verbunden ist,
wobei das Türblatt (110) mindestens einen Bereich gegenüber dem Türrahmen (120) aufweist, ein erster Bereich (111) des Türblattes (110) gegenüber dem Türrahmen (120) mit einem ersten Magnettyp versehen ist, ein zweiter Bereich (121) des Türrahmens (120) gegenüber dem ersten Bereich (111) mit einem zweiten Magnettyp versehen ist, der erste Magnettyp einer von einem Permanentmagneten und einem elektrischen Magneten ist, und der zweite Magnettyp der andere von dem Permanentmagneten und dem elektrischen Magneten ist, und
wobei die Türrahmenanordnung ferner einen Steuerchip (130) und einen Abstandssensor (140) umfasst, die miteinander verbunden sind, wobei der Abstandssensor (140) so konfiguriert ist, dass er eine Änderung eines Abstands zwischen dem Türblatt (110) und dem Türrahmen (120) erfasst, und wobei der Steuerchip (130) so konfiguriert ist, dass er eine Richtung eines Stroms in dem elektrischen Magneten entsprechend der Änderung des von dem Abstandssensor (140) erfassten Abstands steuert.

2. Türrahmenanordnung nach Anspruch 1, wobei der Abstandssensor (140) an einer ersten Montageposition (111a) am ersten Bereich (111) angeordnet ist und einen relativen Abstand zwischen dem Türblatt (110) und dem Türrahmen (120) an der ersten Montageposition (111a) erfasst, und wobei der relative Abstand ein vertikaler Abstand zwischen der ersten Montageposition (111a) und einer Ebene ist, in der der Türrahmen (120) positioniert ist;
oder,
wobei der Abstandssensor (140) an einer zweiten Montageposition (121a) an dem zweiten Bereich (121) angeordnet ist und einen relativen Abstand zwischen dem Türblatt (110) und dem Türrahmen (120) an der zweiten Montageposition (121a) erfasst, und wobei der relative Abstand ein vertikaler Abstand zwischen der zweiten Montageposition (121a) und einer Ebene ist, in der das Türblatt (110) positioniert ist.

3. Türrahmenanordnung nach Anspruch 1 oder 2, wobei das Türblatt (110) mit einem Griffabschnitt (150) versehen ist, und eine Parametererfassungsvorrichtung, die konfiguriert ist, um charakteristische Umgebungsparameter zu erfassen, die mindestens eines von Temperatur, Helligkeit und Druck umfassen, an dem Griffabschnitt (150) vorgesehen ist.

4. Türrahmenanordnung nach Anspruch 3, wobei die Parametererfassungsvorrichtung durch Verdrahtung mit dem Abstandssensor (140) gekoppelt ist, oder durch Verdrahtung mit dem Steuerchip (130) gekoppelt ist.

5. Verfahren zur Steuerung einer Türrahmenanordnung nach einem der vorhergehenden Ansprüche, **dadurch gekennzeichnet, dass** das Verfahren umfasst:
Eingeben (201) eines Stroms in einer ersten Richtung auf den elektrischen Magneten, wenn der Steuerchip ein erstes Steuersignal empfängt, das von dem Abstandssensor (140) übertragen wird, so dass ein Ende des elektrischen Magneten, das dem Permanentmagneten zugewandt ist, eine Polarität aufweist, die der des Permanentmagneten entgegengesetzt ist, wobei das erste Steuersignal erzeugt wird, wenn der Abstandssensor (140) einen abnehmenden Abstand zwischen dem Türblatt (110) und dem Türrahmen (120) erfasst; und
Eingeben (202) eines Stroms in einer zweiten Richtung auf den elektrischen Magneten, wenn der Steuerchip (130) ein zweites Steuersignal empfängt, das von dem Abstandssensor (140) übertragen wird, so dass das Ende des elektrischen Magneten, das dem Permanentmagneten zugewandt ist, die gleiche Polarität wie die des Permanentmagneten aufweist, wobei das zweite Steuersignal erzeugt wird, wenn der Abstandssensor (140) einen zunehmenden Abstand zwischen dem Türblatt (110) und dem Türrahmen (120) erfasst,
wobei sich die erste Richtung von der zweiten Richtung unterscheidet.

6. Verfahren nach Anspruch 5 zur Steuerung einer Türrahmenbaugruppe nach Anspruch 3 oder Anspruch 4, wobei das Verfahren ferner umfasst:
Empfangen (301), an dem Steuerchip (130), eines von der Parametererfassungsvorrichtung gesendeten Erkennungseinschaltsignals, wobei das Erkennungseinschaltsignal von der Parametererfassungsvorrichtung erzeugt wird, wenn ein erfasster Parameter einen vorbestimmten Parameterpegel erreicht; und
Übertragen (302) eines Erkennungs-Ein-Befehls vom Steuerchip (130) an den Abstandssensor (140) zum Auslösen des Abstandssensors (140) zum Erkennen einer Abstandsänderung zwischen dem Türblatt (110) und dem Türrahmen (120).

7. Verfahren nach Anspruch 5 oder Anspruch 6, ferner umfassend:
Empfangen (305) eines dritten Steuersignals an dem Steuerchip (130), das von dem Abstandssensor (140) übertragen wird und eine Beschleunigung des Türblattes (110) trägt, wobei das dritte Steuersignal erzeugt wird, wenn der Abstandssensor (140) einen abnehmenden Abstand zwischen dem Türblatt (110) und dem Türrahmen (120) detektiert und eine detektierte Beschleunigung des Türblattes (110) größer als eine Beschleunigungsschwelle ist;
Abfragen (306) eines vorbestimmten Stromwertes, der der Beschleunigung des Türblattes (110) entspricht, durch den Steuerchip (130), wobei die Beschleunigung des Türblattes (110) proportional zu dem vorbestimmten Stromwert ist; und
Eingeben (307), durch den Steuerchip (130), eines Stroms in der zweiten Richtung mit dem vorbestimmten Stromwert an den elektrischen Magneten.

8. Mikrowellenofen bzw. Mikrowelle mit einer Türrahmenanordnung nach einem der Ansprüche 1 bis 4 und einer Vorrichtung zur Steuerung der Türrahmenanordnung, **dadurch gekennzeichnet, dass** die Vorrichtung umfasst:
ein erstes Eingabemodul (401), das konfiguriert ist, um einen Strom in einer ersten Richtung in den elektrischen Magneten einzugeben, wenn der Steuerchip (130) ein erstes Steuersignal empfängt, das von dem Abstandssensor (140) übertragen wird, so dass ein Ende des elektrischen Magneten, das dem Permanentmagneten zugewandt ist, eine Polarität aufweist, die der des Permanentmagneten entgegengesetzt ist, wobei das erste Steuersignal erzeugt wird, wenn der Abstandssensor (140) einen abnehmenden Abstand zwischen dem Türblatt (110) und dem Türrahmen (120) erfasst; und
ein zweites Eingabemodul (402), das konfiguriert ist, um einen Strom in einer zweiten Richtung in den elektrischen Magneten einzugeben, wenn der Steuerchip (130) ein zweites Steuersignal empfängt, das von dem Abstandssensor (140) übertragen wird, so dass das Ende des elektrischen Magneten, das dem Permanentmagneten zugewandt ist, eine Polarität aufweist, die die gleiche ist wie die des Permanentmagneten, wobei das zweite Steuersignal erzeugt wird, wenn der Abstandssensor (140) einen zunehmenden Abstand zwischen dem Türblatt (110) und dem Türrahmen (120) erfasst,
wobei sich die erste Richtung von der zweiten Richtung unterscheidet.

9. Mikrowellenofen nach Anspruch 8 mit einer Türrahmenbaugruppe nach Anspruch 3 oder Anspruch 4, wobei die Vorrichtung ferner umfasst:
ein erstes Empfangsmodul (403), das so konfiguriert ist, dass es ein von der Parametererfassungsvorrichtung gesendetes Erfassungs-Ein-Signal empfängt, wobei das Erfassungs-Ein-Signal von der Parametererfassungsvorrichtung erzeugt wird, wenn ein erfasster Parameter einen vorbestimmten Parameterpegel erreicht; und
ein Sendemodul (404), das so konfiguriert ist, dass es an den Abstandssensor (140) einen Erfassungs-Ein-Befehl zum Auslösen des Abstandssensors (140) zum Erfassen einer Abstandsänderung zwischen dem Türblatt (110) und dem Türrahmen (120) sendet.

10. Mikrowellenofen nach Anspruch 8 oder Anspruch 9, ferner umfassend:
ein zweites Empfangsmodul (405), das so konfiguriert ist, dass es ein drittes Steuersignal empfängt, das von dem Abstandssensor (140) übertragen wird und eine Beschleunigung des Türblattes (110) trägt bzw. darstellt, wobei das dritte Steuersignal erzeugt wird, wenn der Abstandssensor (140) einen abnehmenden Abstand zwischen dem Türblatt (110) und dem Türrahmen (120) erfasst und eine erfasste Beschleunigung des Türblattes (110) größer als ein Beschleunigungsschwellenwert ist;
ein Abfragemodul (406), das so konfiguriert ist, dass es einen vorbestimmten Stromwert abfragt, der der Beschleunigung des Türblatts (110) entspricht, wobei die Beschleunigung des Türblatts (110) proportional zu dem vorbestimmten Stromwert ist; und
ein drittes Eingabemodul (407), das so konfiguriert ist, dass es einen Strom in der zweiten Richtung mit dem vorgegebenen Stromwert in den Elektromagneten eingibt.

11. Computerprogramm, das, wenn es auf einem Prozessor ausgeführt wird, ein Verfahren nach einem der Ansprüche 5 bis 7 durchführt.

12. Computerlesbarer Informationsträger, der Anweisungen eines Computerprogramms nach Anspruch 11 enthält.

## Revendications

1. Ensemble d'encadrement de porte pour un four à micro-ondes, **caractérisé en ce qu'**il comporte :
une tôle de porte (110) ; et
un encadrement de porte (120) relié à la tôle de porte (110) par une charnière de porte,
dans lequel la tôle de porte (110) comporte au moins une zone opposée à l'encadrement de porte (120), une première zone (111) de la tôle de porte (110) opposée à l'encadrement de porte (120) est pourvue d'un premier type d'aimant, une seconde zone (121) de l'encadrement de porte (120) opposée à la première zone (111) est pourvue d'un second type d'aimant, le premier type d'aimant est un aimant parmi un aimant permanent et un aimant électrique, et le second type d'aimant est l'autre aimant parmi l'aimant permanent et l'aimant électrique, et
dans lequel l'ensemble d'encadrement de porte comporte en outre une puce de commande (130) et un capteur de distance (140) qui sont interconnectés, le capteur de distance (140) est configuré pour détecter une variation d'une distance entre la tôle de porte (110) et l'encadrement de porte (120), et la puce de commande (130) est configurée pour commander une direction d'un courant dans l'aimant électrique en fonction de la variation de la distance détectée par le capteur de distance (140).

2. Ensemble d'encadrement de porte selon la revendication 1, dans lequel le capteur de distance (140) est disposé dans une première position de montage (111a) sur la première zone (111) et détecte une distance relative entre la tôle de porte (110) et l'encadrement de porte (120) dans la première position de montage (111a), et dans lequel la distance relative est une distance verticale entre la première position de montage (111a) et un plan dans lequel l'encadrement de porte (120) est positionné ;
ou,
dans lequel le capteur de distance (140) est disposé dans une seconde position de montage (121a) sur la première zone (121) et détecte une distance relative entre la tôle de porte (110) et l'encadrement de porte (120) dans la seconde position de montage (121a), et dans lequel la distance relative est une distance verticale entre la seconde position de montage (121a) et un plan dans lequel la tôle de porte (110) est positionnée.

3. Ensemble d'encadrement de porte selon la revendication 1 ou 2, dans lequel la tôle de porte (110) est pourvue d'une partie de poignée (150), et un dispositif d'acquisition de paramètres, configuré pour acquérir des paramètres caractéristiques environnementaux comportant au moins un élément parmi une température, une luminosité et une pression, est agencé sur la partie de poignée (150).

4. Ensemble d'encadrement de porte selon la revendication 3, dans lequel le dispositif d'acquisition de paramètres est couplé au capteur de distance (140) par un câblage, ou est couplé à la puce de commande (130) par un câblage.

5. Procédé pour commander un ensemble d'encadrement de porte selon l'une quelconque des revendications précédentes, **caractérisé en ce que** le procédé comporte les étapes consistant à :
appliquer (201) un courant dans une première direction à l'entrée de l'aimant électrique lorsque la puce de commande reçoit un premier signal de commande transmis à partir du capteur de distance (140), de sorte qu'une extrémité de l'aimant électrique faisant face à l'aimant permanent a une polarité opposée à celle de l'aimant permanent, le premier signal de commande étant généré lorsque le capteur de distance (140) détecte une distance décroissante entre la tôle de porte (110) et l'encadrement de porte (120) ; et
appliquer (202) un courant dans une seconde direction à l'entrée de aimant électrique lorsque la puce de commande (130) reçoit un deuxième signal de commande transmis à partir du capteur de distance (140), de sorte que l'extrémité de l'aimant électrique faisant face à l'aimant permanent a une polarité identique à celle de l'aimant permanent, le deuxième signal de commande étant généré lorsque le capteur de distance (140) détecte une distance croissante entre la tôle de porte (110) et l'encadrement de porte (120),
dans lequel la première direction diffère de la seconde direction.

6. Procédé selon la revendication 5 pour commander un ensemble d'encadrement de porte selon la revendication 3 ou la revendication 4, dans lequel le procédé comporte en outre les étapes consistant à :
recevoir (301), sur la puce de commande (130), un signal d'activation de détection transmis à partir du dispositif d'acquisition de paramètres, le signal d'activation de détection étant généré par le dispositif d'acquisition de paramètres lorsqu'un paramètre acquis atteint un niveau de paramètre prédéterminé ; et
transmettre (302) au capteur de distance (140), à partir de la puce de commande (130), une instruction d'activation de détection pour déclencher le capteur de distance (140) pour détecter une variation de distance entre la tôle de porte (110) et l'encadrement de porte (120).

7. Procédé selon la revendication 5 ou la revendication 6, comportant en outre les étapes consistant à :
recevoir (305), sur la puce de commande (130), un troisième signal de commande transmis à partir du capteur de distance (140) et transportant une accélération de la tôle de porte (110), le troisième signal de commande étant généré lorsque le capteur de distance (140) détecte qu'une distance décroissante entre la tôle de porte (110) et l'encadrement de porte (120) et qu'une accélération détectée de la tôle de porte (110) est supérieure à un seuil d'accélération ;
interroger(306), par la puce de commande (130), sur une valeur de courant prédéterminée correspondant à l'accélération de la tôle de porte (110), l'accélération de la tôle de porte (110) étant proportionnelle à la valeur de courant prédéterminée ; et
appliquer (307), par la puce de commande (130), un courant dans la seconde direction ayant la valeur de courant prédéterminée, à l'entrée de l'aimant électrique.

8. Four à micro-ondes comportant un ensemble d'encadrement de porte selon l'une quelconque des revendications 1 à 4 et un dispositif pour commander ledit ensemble d'encadrement de porte, caractérisé ce que le dispositif comporte :
un premier module d'entrée (401), configuré pour appliquer un courant dans une première direction à l'entrée de l'aimant électrique lorsque la puce de commande (130) reçoit un premier signal de commande transmis à partir du capteur de distance (140), de sorte qu'une extrémité de l'aimant électrique faisant face à l'aimant permanent a une polarité opposée à celle de l'aimant permanent, le premier signal de commande étant généré lorsque le capteur de distance (140) détecte une distance décroissante entre la tôle de porte (110) et l'encadrement de porte (120) ; et
un deuxième module d'entrée (402), configuré pour appliquer un courant dans une seconde direction à l'entrée de l'aimant électrique lorsque la puce de commande (130) reçoit un deuxième signal de commande transmis à partir du capteur de distance (140), de sorte que l'extrémité de l'aimant électrique faisant face à l'aimant permanent a une polarité identique à celle de l'aimant permanent, le deuxième signal de commande étant généré lorsque le capteur de distance (140) détecte une distance croissante entre la tôle de porte (110) et l'encadrement de porte (120),
dans lequel la première direction diffère de la seconde direction.

9. Four à micro-ondes selon la revendication 8 comportant un ensemble d'encadrement de porte selon la revendication 3 ou la revendication 4, dans lequel le dispositif comporte en outre :
un premier module de réception (403), configuré pour recevoir un signal d'activation de détection transmis à partir du dispositif d'acquisition de paramètres, le signal d'activation de détection étant généré par le dispositif d'acquisition de paramètres lorsqu'un paramètre acquis atteint un niveau de paramètre prédéterminé ; et
un module de transmission (404), configuré pour transmettre, au capteur de distance (140), une instruction d'activation de détection pour déclencher le capteur de distance (140) pour détecter une variation de distance entre la tôle de porte (110) et l'encadrement de porte (120) .

10. Four à micro-ondes selon la revendication 8 ou la revendication 9, comportant en outre :
un second module de réception (405), configuré pour recevoir un troisième signal de commande transmis à partir du capteur de distance (140) et transportant une accélération de la tôle de porte (110), le troisième signal de commande étant généré lorsque le capteur de distance (140) détecte une distance décroissante entre la tôle de porte (110) et l'encadrement de porte (120) et qu'une accélération détectée de la tôle de porte (110) est supérieure à un seuil d'accélération ;
un module d'interrogation (406), configuré pour interroger sur une valeur de courant prédéterminée correspondant à l'accélération de la tôle de porte (110), l'accélération de la tôle de porte (110) étant proportionnelle à la valeur de courant prédéterminée ; et
un troisième module d'entrée (407), configuré pour appliquer un courant dans la seconde direction ayant la valeur de courant prédéterminée, à l'entrée de l'aimant électrique.

11. Programme informatique qui, lorsqu'il s'exécute sur un processeur, met en œuvre un procédé selon l'une quelconque des revendications 5 à 7.

12. Support d'information lisible par ordinateur contenant des instructions d'un programme informatique selon la revendication 11.
